(19)

**Europäisches Patentamt**

**European Patent Office**

**Office européen des brevets**

(11)  **EP 4 159 567 A1**

(12)  **EUROPEAN PATENT APPLICATION**

(43) Date of publication:
05.04.2023  Bulletin 2023/14

(21) Application number: 21199909.9

(22) Date of filing: 29.09.2021

(51) International Patent Classification (IPC):
*B60W 30/12* $^{(2006.01)}$    *B60W 30/18* $^{(2006.01)}$
*B60W 50/00* $^{(2006.01)}$    *G05D 1/02* $^{(2006.01)}$

(52) Cooperative Patent Classification (CPC):
**B60W 30/18163; B60W 30/12; B60W 50/00;**
**G05D 1/0212;** B60W 2050/0013; B60W 2710/20

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventors:
• **SAJADI ALAMDARI, Seyed Amin**
**42113 Wuppertal (DE)**
• **VIJAYKUMAR, Anand**
**42119 Wuppertal (DE)**

(74) Representative: **Manitz Finsterwald**
**Patent- und Rechtsanwaltspartnerschaft mbB**
**Martin-Greif-Strasse 1**
**80336 München (DE)**

(54)  **METHODS AND SYSTEMS FOR TRAJECTORY PLANNING OF A VEHICLE**

(57)  A computer implemented method for trajectory planning of a vehicle comprises the following steps carried out by computer hardware components: determining a reference for a trajectory of the vehicle for a pre-determined prediction time horizon, wherein the reference varies over time during the prediction time horizon; determining a location error based on the reference for the trajectory; and determining a steering command for the vehicle based on the location error.

Processed by Luminess, 75001 PARIS (FR)

EP 4 159 567 A1

**Description**

FIELD

The present disclosure relates to methods and systems for trajectory planning of a vehicle.

BACKGROUND

Autonomously driving vehicles do not only have to observe a safe distant to vehicles and other objects in front of and behind the vehicle, but also to the side. A lateral control method in an autonomous vehicle is intended to track a desired path, in case of lane centering application, the lane center is the desired path. This tracking application should be performed in a safe and comfortable manner.

Accordingly, there is a for efficient and reliable tracking.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for trajectory planning of a vehicle, the method comprising the following steps performed (in other words: carried out) by computer hardware components: determining a reference for a trajectory of the vehicle for a pre-determined prediction time horizon, wherein the reference varies over time during the prediction time horizon; determining a location error based on the reference for the trajectory; and determining a steering command for the vehicle based on the location error.

According to an embodiment, the reference is determined based on a tanh-function.

According to an embodiment, the reference is determined based on an initial value of a lateral offset.

According to an embodiment, the reference is determined based on a reference value to be achieved.

According to an embodiment, the reference is determined based on an arc-length state of the vehicle.

According to an embodiment, the arc-length state varies over the prediction time horizon.

According to an embodiment, the arc-length state is determined based on curvature and ego speed. The arc length may be calculated from the vehicle as an origin. The arc length may start with 0 and the rest of the state in the horizon may be predicted based on the curvature and the ego speed.

According to an embodiment, the reference is determined based on a velocity (v) of the vehicle.

According to an embodiment, the velocity varies over the prediction time horizon.

According to an embodiment, the velocity is determined using a sensor mounted at the vehicle.

According to an embodiment, the location error is determined using model predictive control.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein.

According to an embodiment, the vehicle further comprises: a sensor configured to determine at least one of a location of the vehicle or a speed of the vehicle.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

With the methods, devices and systems as described herein, reference generation for lane centering and lane change, for example for use in an advanced driver assistance system (ADAS), may be provided.

DRAWINGS

Exemplary embodiments and functions of the present disclosure are described herein in conjunction with the following drawings, showing schematically:

Fig. 1     an illustration of a model predictive controller;

Fig. 2     a polynomial based trajectory;

Fig. 3     comparison of reference generated using polynomial and mimic function;

Fig. 4     comparison of reference generated using polynomial and mimic function;

Fig. 5     a steering response comparison between constant reference in horizon and varying reference;

Fig. 6     a cross tracking error comparison between constant reference in horizon and varying reference;

Fig. 7     an orientation error comparison between constant reference in horizon and varying reference;

Fig. 8     a flow diagram illustrating a method for trajectory planning of a vehicle; and

Fig. 9     a computer system with a plurality of computer hardware components configured to carry out steps of a computer implemented method for trajectory planning of a vehicle according to various embodiments.

DETAILED DESCRIPTION

Side collision warning systems may warn the driver when a side collision with a collidable object, for example another vehicle or a barrier. This may be done by calculating the lateral distance between the collidable object and the host vehicle and also to estimate the time to collision between the host vehicle and the collidable object. If any of these two variables is below a corresponding threshold, the system may output a side collision warning.

According to various embodiments, a mathematical cost function and a stable system dynamics may be provided in order to design the model predictive controller which minimizes the cost and provides an optimal solution to control the vehicle laterally. The cost function may include (or may consist of) a term that minimizes the lateral offset w.r.t lane center. With regard to this, a reference value for the lateral offset needs to be provided (and may be provided). This reference value may be a continuous function that varies within the horizon.

According to various embodiments, devices and methods for vehicle (side) collision prediction utilizing modified functions for the model predictive controller may be provided.

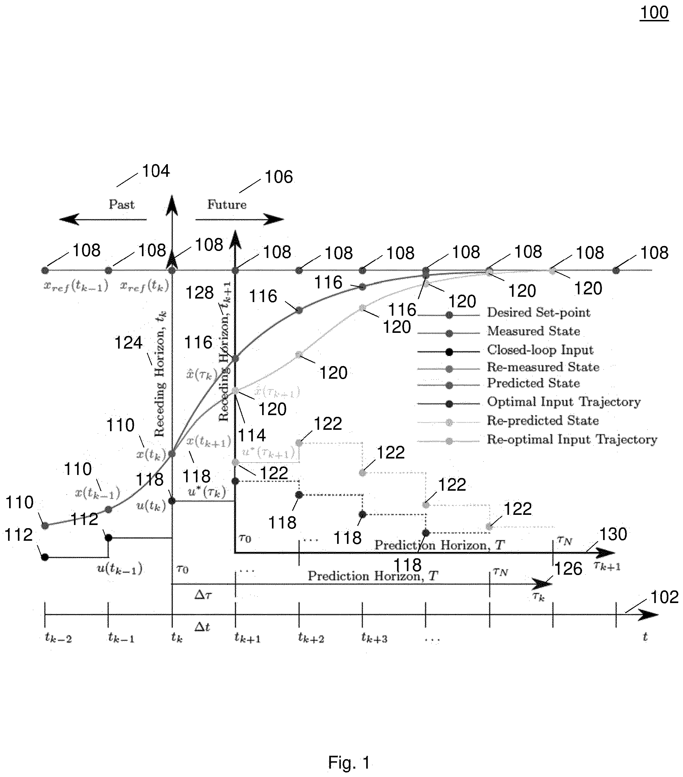

Fig. 1 shows an illustration 100 of a model predictive controller.

Model predictive controller may be a powerful controller. As the name indicates, the controller may predict the state of the vehicle, for example the lateral offset from reference and orientation error w.r.t reference of vehicle for a finite Horizon time (T). The reference value for the vehicle may be calculated by a planning block, and then introduce this value to a Model Predictive Control (MPC), such that it compensates the error by generating a control signal at the current time instance.

In Fig. 1, a time axis 102 (with past time 104 and future time 106), the desired set-point 108, measured states 110, closed-loop input 112, re-measured state 114, predicted states 116, optimal input trajectory 118, re-predicted state 120, and re-optimal input trajectory 122 are illustrated. A receding horizon ($t_k$) 124 and a corresponding prediction horizon (T) 126 are shown. A receding horizon ($t_{k+1}$) 128 and a corresponding prediction horizon (T) 130 are shown.

The following symbols may be used:

$t_k$ - Current time step;
t - time axis forward in time;
T - Prediction horizon (duration of prediction of states);
$\Delta t$ - Sampling period;
$u^*(\tau_k)$ — Optimal control value at the current time step;

$\hat{x}_{ref}(t_k)$ — reference trajectory for states;
$\hat{x}(\tau)$ — Predicted states.

The cost function according to various embodiments may be used by the optimizer in the model predictive controller to provide the optimal control value at the current time step. In this case, the steering angle may be the optimal control signal sequence($u^*$) that is used to actuate the vehicle in order to minimize error of orientation and lateral offset (states of the system). Based on the system dynamics and the cost functions designed, the predictions of trajectory may also be calculated. The obtained control sequence may be the motion control sequence that can be applied to the vehicle.

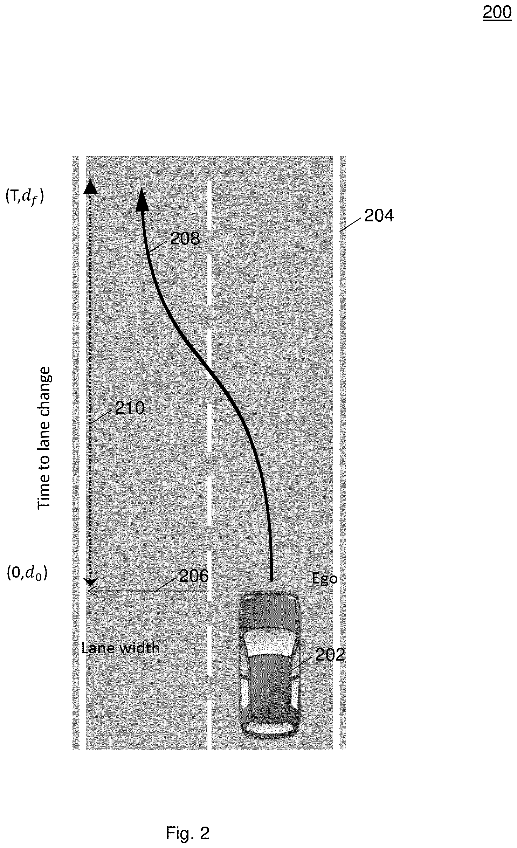

Fig. 2 shows an illustration of a vehicle 202 (which may be referred to as ego vehicle) on a road 204 with lane width 206. A trajectory 208 and a time to lane change 210 are illustrated.

Various trajectory planners may generate a polynomial based trajectory to merge to the reference. This reference may be the lane center for a typical lane centering method or a lane change for an automatic lane change application. The error in the position of the vehicle may be provided to a motion controller which generates a steering command to compensate for the error. The equation (1) below represents an exemplary equation for reference generation:

$$d_{ref} = a_0 + a_1 dt + a_2 dt^2 + a_3 dt^3 + a_4 dt^4 + a_5 dt^5 \qquad (1)$$

The path generated is a 5th order polynomial which is solved using a two point boundary value problem by optimizing the jerk for comfort of passengers. The values $a_0$, $a_1$, $a_2$, $a_3$, $a_4$, $a_5$ may represent the coefficients of the polynomial, $dt$ may represent the sampling time during the maneuver of the vehicle and $d_{ref}$ may represent the value of the generated reference at that time instant that needs to be tracked by the motion controller.

Various approaches may generate a reference and a single reference value may be constant throughout the length of the prediction horizon (T) in the current time step. In the next planning interval, a new reference value based on the position of the vehicle may be generated and again kept constant in the entire length of the prediction horizon (T) and this process may repeat until the vehicle has completely aligned with the desired reference.

According to various embodiments, two strategies are provided to achieve the above mentioned problem using MPC in a different way. This technique creates a smoother approach to the reference by the vehicle as will be shown in various Figures below.

A 5th order polynomial approximate function as the polynomial based trajectory may suffer from overhead of calculations as it uses power of variables and also an overfitting problem that needs to be dealt with.

According to various embodiments, a different function which generates very similar profile as that of the polynomial provides a good approach as this reduces complexity of calculations. The function according to various embodiments (for example as described in equation (2)) matches the polynomial in all cases for different initial and final conditions of the vehicle.

As described above, various approaches generate a reference value to be achieved and keep this constant throughout the horizon. In contrast, according to various embodiments, the reference generation function within the horizon which varies across the length of the horizon depending on the position and speed of the vehicle may be introduced. This may improve stability and may merge into the desired reference more smoothly as this considers the position and velocity of the vehicle at every point in the horizon.

The approximate function that mimics the polynomial is given by

$$d_{ref} = b_0 + 0.5 * (d - b_0) * \left(1 + tanh\frac{\frac{4.5}{T} * \left(s - \left(\frac{T}{2}\right) * v\right)}{(1 + v)}\right) \qquad (2)$$

$b_0$ may represent the initial value of the lateral offset from lane center which is obtained from suitable vehicle sensor input.

$d$ may represent the reference value that needs to be achieved. This may be similar to the final boundary condition of the lateral position of the vehicle in the polynomial approach. This usually may be the lateral offset from the lane center for lane centering or the lateral offset from target new lane center for lane change or a bias value within the lane for a lane biasing maneuver.

$s$ may represent the arc-length state of the vehicle. This state may correspond to the entire predicted value of the position of the vehicle longitudinally in the Frenet coordinate and hence the name $s$ instead of $x$.

In order to imitate a human like driving experience, the trajectory generation problem formulation may be achieved in Frenet coordinates. The Frenet coordinates may also be referred to as road coordinates, and are is modeled with two main states, i.e. timed offset from the lane center denoted by $d(t)$ and the covered arc length of the vehicle along the lane center denoted as $s(t)$. The measurements from the vision systems in the current vehicle set up may already be in road coordinates and hence may make for an effective way of controlling the vehicle. Generally, industrial vision systems may provide measurements in road coordinates which may make design easier with minimum coordinate transformations.

$v$ may represent the velocity state of the vehicle. This may contain value staring from the initial velocity of the vehicle and the predicted velocity until the end of the horizon.

$T$ may represent the time to lane change which may be a self tuning parameter based on speed of the vehicle.

As will be understood from the above equation, the reference value $d_{ref}$ varies across the entire horizon based on the predicted values of $s$ and $v$ which is different from various other approaches where the reference is a constant value.

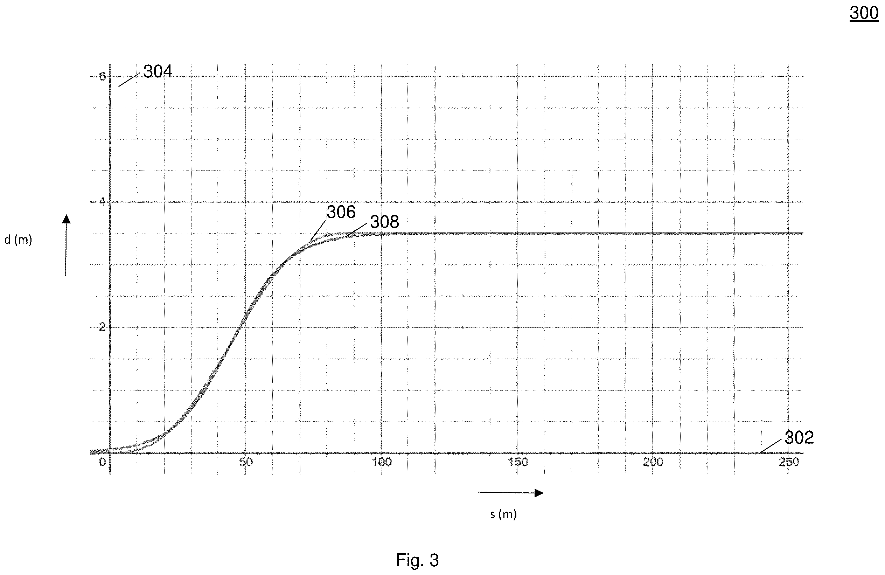

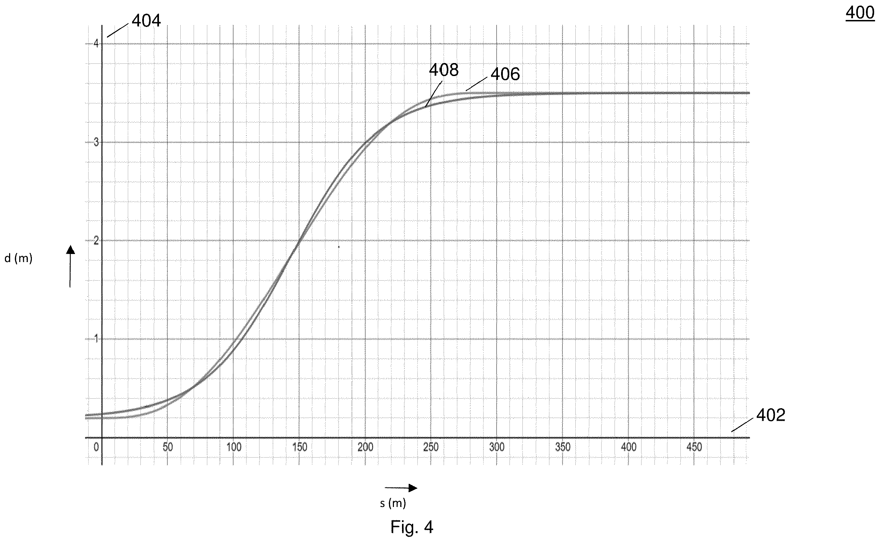

Plots of two different cases are shown in Fig. 3 and Fig. 4. The plots show the difference between a polynomial function and the approximated function according to equation (2) used to achieve the same goal.

Fig. 3 shows an illustration 300 with a horizontal axis 302 representing a forward direction of the vehicle and a vertical axis 304 representing a lateral position of the vehicle. Curve 306 represents the polynomial function and the curve 308 represents the approximate function according to equation 2.

The graph of Fig. 3 has been plotted for a use case with the following parameters:

$b_0$ = 0.0m;
$d$ = 3.5m (Similar reference value would be desired for a lane change, assuming that the lane width in this case is 3.5m);
$s$ = 0m initial value and this grows over time based on the speed of vehicle;
$v$ = 20 m/s; and
$T$ = 5s.

A different plot may be generated if any of the initial conditions or parameters such as the time to lane change varies from the above mentioned example. To compare another use case, if the time to lane change T = 8s , speed $v$ = 36 m/s and an initial lateral offset from lane center $b_0$ = 0.2m, the plots of Fig. 4 may be obtained.

Fig. 4 shows an illustration 400 with a horizontal axis 402 representing a forward direction of the vehicle and a vertical axis 404 representing a lateral position of the vehicle. Curve 406 represents the polynomial function and the curve 408 represents the approximate function according to equation 2.

In the following, graphs and plots showing the change in lateral offset from current position to the final reference value will be described. It may be seen that the steering response and also the change in lateral offset of the vehicle is much smoother for the reference generation function according to various embodiments (for example according to equation (2)) with the horizon as compared to a final constant target reference value. The use case for the plots below is to have a lane change like behavior where the required lateral offset from an initial offset is approximately the lane width (3.5m in this case).

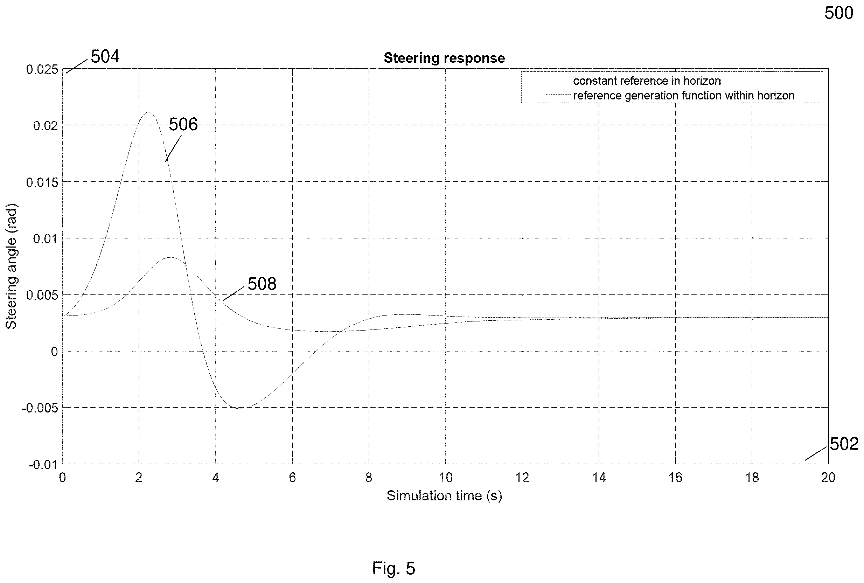

Fig. 5 shows an illustration 500 of that the steering response has a much smoother rise and also significantly lower amplitude for the same maneuver. This in practical test would result in a comfortable lane change for the passenger. A horizontal axis 502 indicates time, and a vertical axis 304 indicates the steering angle. Curve 506 results from a constant reference in horizon. Curve 508 results from a reference generation function within horizon, for example according to equation (2).

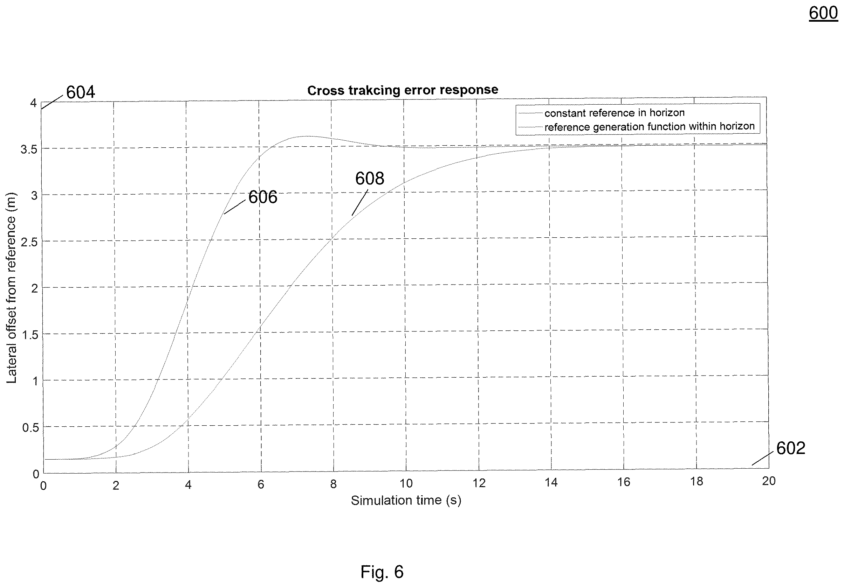

Fig. 6 shows an illustration 600 of the comparison between the lateral offset for both cases and that the modified cost makes the rate of lateral offset smaller than the conventional, again resulting in a smoother maneuver. Also, a difference may be noted in the overshoots between the plots suggesting that the varying reference function in the horizon has a smaller overshoot for the same maneuver as compared to the constant reference value. A horizontal axis 602 indicates time, and a vertical axis 604 indicates the lateral offset. Curve 606 results from a constant reference in horizon. Curve 608 results from a reference generation function within horizon, for example according to equation (2).

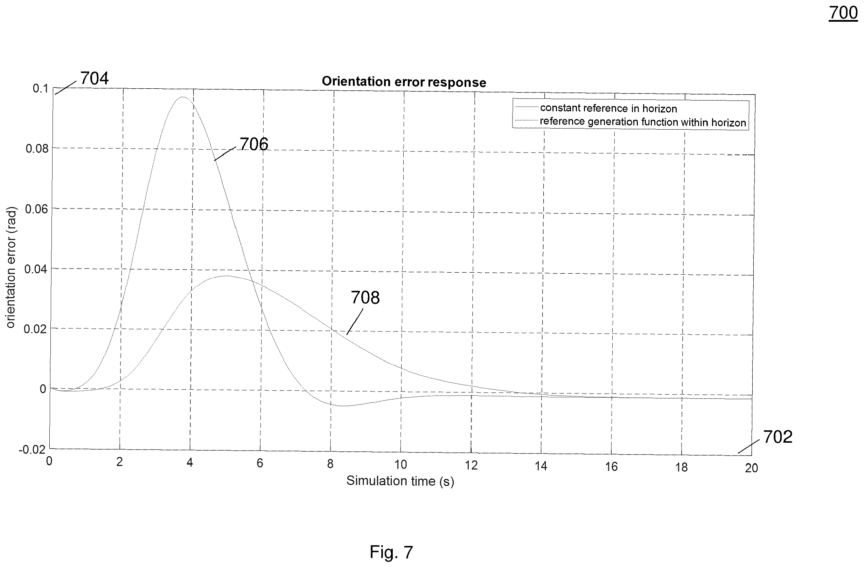

Fig. 7 shows an illustration 700 of the difference in orientation errors. This may have a significant difference where the compensation of the error with the varying reference is far better than the constant reference value. A horizontal axis 702 indicates time, and a vertical axis 704 indicates the orientation error. Curve 706 results from a constant reference in horizon. Curve 708 results from a reference generation function within horizon, for example according to equation (2).

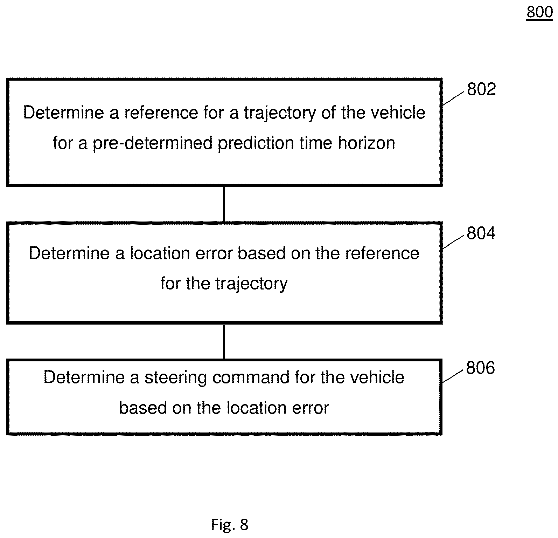

Fig. 8 shows a flow diagram 800 illustrating a method for trajectory planning of a vehicle. At 802, a reference for a trajectory of the vehicle for a pre-determined prediction time horizon may be determined, wherein the reference varies over time during the prediction time horizon. At 804, a location error may be determined based on the reference for the trajectory. At 806, a steering command may be determined for the vehicle based on the location error.

According to various embodiments, the reference may be determined based on a tanh-function.

According to various embodiments, the reference may be determined based on an initial value (b0) of a lateral offset.

According to various embodiments, the reference $d_{ref}$ may be determined based on a reference value (d) to be achieved.

According to various embodiments, the reference may be determined based on an arc-length state (s) of the vehicle.

According to various embodiments, the arc-length state (s) may vary over the prediction time horizon.

According to various embodiments, the arc-length state (s) may be determined based on curvature and ego speed.

According to various embodiments, the reference may be determined based on a velocity (v) of the vehicle.

According to various embodiments, the velocity (v) may vary over the prediction time horizon.

According to various embodiments, the velocity (v) may be determined using a sensor mounted at the vehicle.

According to various embodiments, the location error may be determined using model predictive control.

Each of the steps 802, 804, 806, and the further steps described above may be performed by computer hardware components.

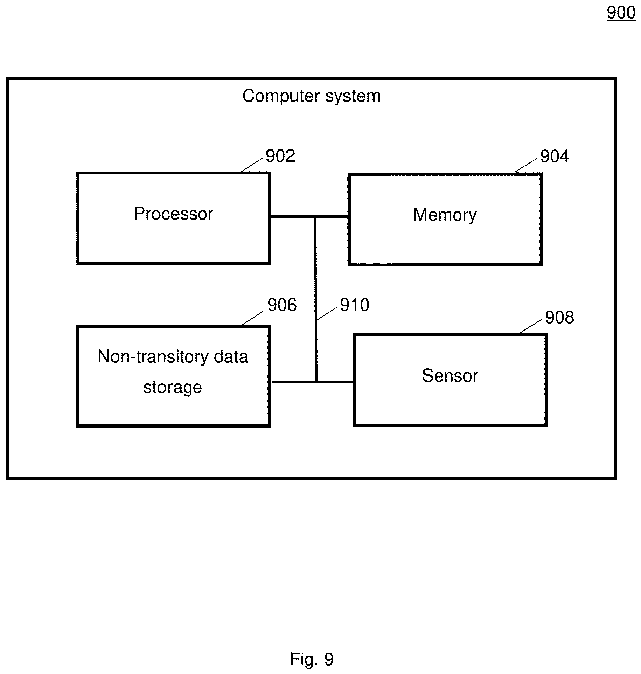

Fig. 9 shows a computer system 900 with a plurality of computer hardware components configured to carry out steps of a computer implemented method for trajectory planning of a vehicle according to various embodiments. The computer system 900 may include a processor 902, a memory 904, and a non-transitory data storage 906. A sensor 908 may be provided as part of the computer system 900 (like illustrated in Fig. 9), or may be provided external to the computer system 900.

The processor 902 may carry out instructions provided in the memory 904. The non-transitory data storage 906 may store a computer program, including the instructions that may be transferred to the memory 904 and then executed by the processor 902. The sensor 908 may be used for determining at least one of a location of the vehicle or a speed of the vehicle.

The processor 902, the memory 904, and the non-transitory data storage 906 may be coupled with each other, e.g. via an electrical connection 910, such as e.g. a cable or a computer bus or via any other suitable electrical connection to exchange electrical signals. The sensor 908 may be coupled to the computer system 900, for example via an external interface, or may be provided as parts of the computer system (in other words: internal to the computer system, for example coupled via the electrical connection 910).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 900.

Reference numeral list

| | |
|---|---|
| 100 | model predictive controller according to various embodiments |
| 102 | time axis |
| 104 | past time |
| 106 | future time |
| 108 | desired set-point |
| 110 | measured states |
| 112 | closed-loop input |
| 114 | re-measured state |
| 116 | predicted states |
| 118 | optimal input trajectory |
| 120 | re-predicted state |
| 122 | re-optimal input trajectory |
| 124 | receding horizon |
| 126 | prediction horizon |
| 128 | receding horizon |
| 130 | prediction horizon |
| | |
| 200 | polynomial based trajectory |
| 202 | vehicle |
| 204 | road |
| 206 | lane width |
| 208 | trajectory |
| 210 | time to lane change |
| | |
| 300 | illustration of a comparison of reference generated using polynomial and mimic function |
| 302 | horizontal axis |

| | |
|---|---|
| 304 | vertical axis |
| 306 | curve |
| 308 | curve |
| 400 | illustration of a comparison of reference generated using polynomial and mimic function |
| 402 | horizontal axis |
| 404 | vertical axis |
| 406 | curve |
| 408 | curve |
| 500 | illustration of a steering response comparison between constant reference in horizon and varying reference |
| 502 | horizontal axis |
| 504 | vertical axis |
| 506 | curve |
| 508 | curve |
| 600 | illustration of a cross tracking error comparison between constant reference in horizon and varying reference |
| 602 | horizontal axis |
| 604 | vertical axis |
| 606 | curve |
| 608 | curve |
| 700 | illustration of an orientation error comparison between constant reference in horizon and varying reference |
| 702 | horizontal axis |
| 704 | vertical axis |
| 706 | curve |
| 708 | curve |
| 800 | flow diagram illustrating a method for trajectory planning of a vehicle |
| 802 | step of determining a reference for a trajectory of the vehicle for a pre-determined prediction time horizon, wherein the reference varies over time during the prediction time horizon |
| 804 | step of determining a location error based on the reference for the trajectory |
| 806 | step of determining a steering command for the vehicle based on the location error |
| 900 | computer system according to various embodiments |
| 902 | processor |
| 904 | memory |
| 906 | non-transitory data storage |
| 908 | sensor |
| 910 | connection |

**Claims**

1. Computer implemented method for trajectory planning of a vehicle,
the method comprising the following steps carried out by computer hardware components::

   - determining (802) a reference for a trajectory of the vehicle for a pre-determined prediction time horizon, wherein the reference varies over time during the prediction time horizon;
   - determining (804) a location error based on the reference for the trajectory; and
   - determining (806) a steering command for the vehicle based on the location error.

2. The computer implemented method of claim 1,
wherein the reference is determined based on a tanh-function.

3. The computer implemented method of at least one of claims 1 to 2,
wherein the reference is determined based on an initial value (b0) of a lateral offset.

4. The computer implemented method of at least one of claims 1 to 3,

wherein the reference is determined based on a reference value (d) to be achieved.

**5.** The computer implemented method of at least one of claims 1 to 4,
wherein the reference is determined based on an arc-length state (s) of the vehicle.

**6.** The computer implemented method of claim 5,
wherein the arc-length state (s) varies over the prediction time horizon.

**7.** The computer implemented method of at least one of claims 5 or 6,
wherein the arc-length state (s) is determined based on curvature and ego speed.

**8.** The computer implemented method of at least one of claims 1 to 7,
wherein the reference is determined based on a velocity (v) of the vehicle.

**9.** The computer implemented method of claim 8,
wherein the velocity (v) varies over the prediction time horizon.

**10.** The computer implemented method of at least one of claims 8 or 9,
wherein the velocity (v) is determined using a sensor mounted at the vehicle.

**11.** The computer implemented method of at least one of claims 1 to 10,
wherein the location error is determined using model predictive control.

**12.** Computer system (900), the computer system (900) comprising a plurality of computer hardware components configured to carry out steps of the computer implemented method of at least one of claims 1 to 11.

**13.** A vehicle comprising the computer system (900) of claim 12.

**14.** The vehicle of claim 13, further comprising:
a sensor (908) configured to determine at least one of a location of the vehicle or a speed of the vehicle.

**15.** Non-transitory computer readable medium comprising instructions for carrying out the computer implemented method of at least one of claims 1 to 11.

100

Fig. 1

Fig. 2

Fig. 3

EP 4 159 567 A1

Fig. 4

EP 4 159 567 A1

Fig. 5

Fig. 6

EP 4 159 567 A1

Fig. 7

800

| Determine a reference for a trajectory of the vehicle for a pre-determined prediction time horizon | 802 |

| Determine a location error based on the reference for the trajectory | 804 |

| Determine a steering command for the vehicle based on the location error | 806 |

Fig. 8

<u>900</u>

Computer system

Processor 902

Memory 904

Non-transitory data storage 906

910

Sensor 908

Fig. 9

Europäisches
Patentamt

European
Patent Office

Office européen
des brevets

# EUROPEAN SEARCH REPORT

**Application Number**

**EP 21 19 9909**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU QIONG ET AL: "Research on Lane-Change Strategy With Real-Time Obstacle Avoidance Function", IEEE ACCESS, IEEE, USA, vol. 8, 10 November 2020 (2020-11-10), pages 211255-211268, XP011823059, DOI: 10.1109/ACCESS.2020.3037103 [retrieved on 2020-12-02] * page 211255 - page 211258; figure 1 * | 1,3-6, 10-15 | INV. B60W30/12 B60W30/18 B60W50/00 G05D1/02 |
| X | HONGYU ZHENG ET AL: "Investigation of a Longitudinal and Lateral Lane-Changing Motion Planning Model for Intelligent Vehicles in Dynamical Driving Environments", IEEE ACCESS, vol. 7, 1 January 2019 (2019-01-01), pages 44783-44802, XP055766181, DOI: 10.1109/ACCESS.2019.2909273 * page 44790 - page 44796 * | 1-4,10, 12-15 | |
| X | MORITZ WERLING ET AL: "Optimal trajectory generation for dynamic street scenarios in a Frenét Frame", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 987-993, XP031708906, ISBN: 978-1-4244-5038-1 * the whole document * | 1,3-10, 12-15 | TECHNICAL FIELDS SEARCHED (IPC) B60W G05D |

The present search report has been drawn up for all claims

| Place of search | Date of completion of the search | Examiner |
|---|---|---|
| Munich | 15 March 2022 | Stolle, Martin |

EPO FORM 1503 03.82 (P04C01)